# EUROPEAN PATENT APPLICATION

(11) **EP 2 475 073 A1**
(43) Date of publication of application: **11.07.2012**
(21) Application number: 11195882.3
(22) Date of filing: 28.12.2011
(51) Int. Cl.: H02J 17/00, B60L 11/18

(54) **Non-contact power transmission apparatus and power transmission method therefor**

(30) Priority: 06.01.2011 JP 2011001191
(71) Applicant: Kabushiki Kaisha Toyota Jidoshokki, Kariya-shi, Aichi 448-8671 (JP)
(72) Inventor: Katsunaga, Hiroshi, Kariya-shi, Aichi 448-8671 (JP); Taguchi, Yuichi, Kariya-shi, Aichi 448-8671 (JP)
(74) Representative: TBK

(57) **Abstract**

A primary coil (12), a primary resonance coil (13), a secondary resonance coil (14), a secondary coil (15), and a load (16) form a resonant system (20). A frequency matching section (24; 24, 30, 31) is configured to match the resonant frequency of a resonant system (20) and the output frequency of a high frequency power source (11) with each other when the load (16) fluctuates. An impedance matching section (17, 24) is configured to match the impedance from input terminals (12a, 12b) of the primary coil (12) to the load (16) at the resonant frequency and the impedance from the high frequency power source (11) to the input terminals (12a, 12b) of the primary coil (12) with each other.

## Description

### BACKGROUND

The present disclosure relates to a non-contact power transmission apparatus.

The non-contact power transmission apparatus disclosed in Japanese Laid-Open Patent Publication No. 2010-141976 detects the state of a resonant system, and adjusts the impedance of a variable impedance circuit based on the detection result. The resonant system includes a primary coil, a primary resonance coil, a secondary resonance coil, a secondary coil, and a load. A high frequency power source supplies electric power to the primary coil. The impedance is adjusted such that the input impedance of the resonant system at the resonant frequency of the resonant system and the impedance of the section closer to the high frequency power source than the primary coil are matched with each other.

If the load varies, the state of impedance matching is changed, and the resonant frequency of the resonant system is also changed. Therefore, for example, even if impedance matching is performed while fixing the output frequency of the high frequency power source, the maximum efficiency for power transmission is not obtained.

Accordingly, it is an objective of the present disclosure to provide a non-contact power transmission apparatus that efficiently supplies electric power from a high frequency power source to a load even if the load fluctuates.

### SUMMARY

In accordance with the present disclosure, a non-contact power transmission apparatus includes a high frequency power source, a primary coil having input terminals for receiving electric power from the high frequency power source, a primary resonance coil for receiving electric power from the primary coil by electromagnetic induction, a secondary resonance coil for receiving electric power from the primary resonance coil by magnetic field resonance, a secondary coil for extracting electric power received by the secondary resonance coil by electromagnetic induction, and a load to which the electric power received by the secondary coil is supplied. The primary coil, the primary resonance coil, the secondary resonance coil, the secondary coil, and the load form a resonant system. The non-contact power transmission apparatus further includes a frequency matching section and an impedance matching section. The frequency matching section is formed to match the resonant frequency of the resonant system and the output frequency of the high frequency power source with each other when the load fluctuates. The impedance matching section is formed to match the impedance from the input terminals of the primary coil to the load at the resonant frequency and the impedance from the high frequency power source to the input terminals of the primary coil with each other in a state where the frequency matching section matches the resonant frequency of the resonant system and the output frequency of the high frequency power source with each other.

According to the above-mentioned structure, when the load fluctuates, the frequency matching section matches the resonant frequency of the resonant system and the output frequency of the high frequency power source with each other. In the state where the resonant frequency of the resonant system and the output frequency of the high frequency power source are matched with each other, the impedance matching section matches the impedance from the input terminals of the primary coil to the load at the resonant frequency of the resonant system and the impedance from the high frequency power source to the input terminals of the primary coil with each other.

The non-contact power transmission apparatus therefore efficiently supplies electric power from the high frequency power source to the load even when the load fluctuates.

The phrase "the impedance from the input terminals of the primary coil to the load" refers to the impedance of the entire resonant system measured at both ends of the primary coil. The sentence "the impedance from the input terminals of the primary coil to the load and the impedance from the high frequency power source to the input terminals of the primary coil match with each other" means not only the case where both impedances are completely matched, but also includes, for example, the case where the power transmission efficiency of the non-contact power transmission apparatus is 80% or more, and also includes the case where the reflected power to the AC power source is 5% or less. Furthermore, the case is also included where there is a difference within a range in which a desired performance is achieved. The sentence "the impedance from the input terminals of the primary coil to the load and the impedance from the high frequency power source to the input terminals of the primary coil match with each other" means, for example, that the difference between the impedances is within ± 10%, and more preferably, within ± 5%. The phrase "the resonant frequency of the resonant system" means the frequency at which the power transmission efficiency is maximized.

In accordance with one aspect, the frequency matching section may be configured to match the output frequency of the high frequency power source with the resonant frequency of the resonant system.

In accordance with one aspect, the frequency matching section may be configured to match the resonant frequency of the resonant system with the output frequency of the high frequency power source.

The non-contact power transmission apparatus may further include an impedance measuring equipment formed to detect fluctuation of the load.

In this case, the non-contact power transmission apparatus detects fluctuation of the load by the impedance measuring equipment.

In accordance with another aspect of the present disclosure, a non-contact power transmission method in a resonant system is provided. The resonant system includes a primary coil having input terminals for receiving electric power from a high frequency power source, a primary resonance coil for receiving electric power from the primary coil by electromagnetic induction, a secondary resonance coil for receiving electric power from the primary resonance coil by magnetic field resonance, a secondary coil for extracting electric power received by the secondary resonance coil by electromagnetic induction, and a load to which the electric power received by the secondary coil is supplied. The non-contact power transmission method includes: matching the resonant frequency of the resonant system and the output frequency of the high frequency power source with each other when the load fluctuates; and matching the impedance from the input terminals of the primary coil to the load at the resonant frequency and the impedance from the high frequency power source to the input terminals of the primary coil with each other in a state where the resonant frequency of the resonant system and the output frequency of the high frequency power source are matched with each other.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a schematic diagram illustrating the structure of a non-contact power transmission apparatus according to a first embodiment;
Fig. 2 is a time chart for explaining the operation of the non-contact power transmission apparatus of Fig. 1;
Fig. 3 is an explanatory diagram showing the relationship between the load resistance and the power transmission efficiency according to a non-contact power transmission apparatus of a comparative example;
Fig. 4 is an explanatory diagram showing the relationship between the load resistance and the power transmission efficiency according to the non-contact power transmission apparatus of Fig. 1;
Fig. 5 is a schematic diagram illustrating the structure of a non-contact power transmission apparatus according to a second embodiment; and
Fig. 6 is a time chart for explaining the operation of the non-contact power transmission apparatus of Fig. 5.

### DESCRIPTION OF THE PREFERRED EMBODIMENTS

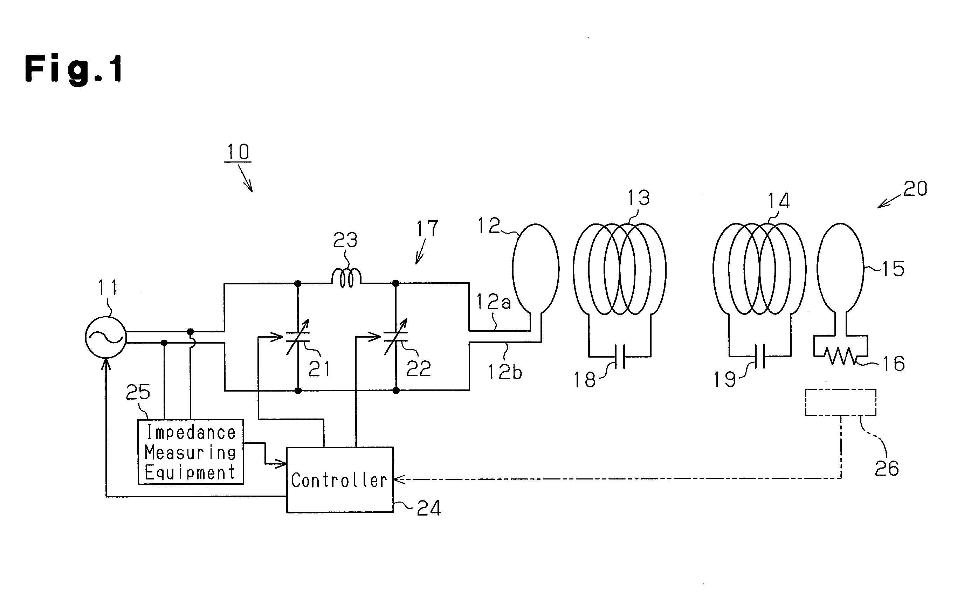

A first embodiment of the present disclosure will now be described with reference to Figs. 1 to 4.

As shown in Fig. 1, a non-contact power transmission apparatus 10 includes a high frequency power source 11, a primary coil 12 connected to the high frequency power source 11, a primary resonance coil 13, a secondary resonance coil 14, a secondary coil 15, a load 16 connected to the secondary coil 15, and a variable impedance circuit 17. The variable impedance circuit 17 is located between the high frequency power source 11 and the primary coil 12. A capacitor 18 is connected in parallel to the primary resonance coil 13. A capacitor 19 is connected in parallel to the secondary resonance coil 14.

The primary coil 12, the primary resonance coil 13, and the capacitor 18 form a primary resonator. The secondary resonance coil 14, the secondary coil 15, and the capacitor 19 form a secondary resonator. The primary coil 12, the primary resonance coil 13, the secondary resonance coil 14, the secondary coil 15, the load 16, and the capacitors 18, 19 form a resonant system 20.

The high frequency power source 11 is a power source that outputs a high frequency voltage, which is an AC voltage in the first embodiment. The frequency of the AC power output from the high frequency power source 11 is variable.

The primary coil 12, the primary resonance coil 13, the secondary resonance coil 14, and the secondary coil 15 are each formed of an electric wire. The electric wires forming the coils are, for example, vinyl insulated wires. The winding diameter and the number of windings of each coil is set in accordance with the level of electric power to be transmitted as needed. In the first embodiment, the primary coil 12, the primary resonance coil 13, the secondary resonance coil 14, and the secondary coil 15 have the same winding diameters. The primary resonance coil 13 and the secondary resonance coil 14 are identical to each other. The capacitors 18, 19 are identical to each other. The primary coil 12 includes input terminals 12a and 12b for receiving electric power from the high frequency power source 11 through the variable impedance circuit 17.

A variable matching circuit, which is the variable impedance circuit 17 in the first embodiment, includes two variable capacitors 21, 22 and an inductor 23. The variable capacitor 21 is connected in parallel to the high frequency power source 11. The variable capacitor 22 is connected in parallel to the primary coil 12. The inductor 23 is connected between the variable capacitors 21, 22. When the capacitance of the variable capacitors 21, 22 is respectively changed, the impedance of the variable impedance circuit 17 is changed. The variable impedance circuit 17 changes the impedance of the section closer to the high frequency power source 11 than the primary coil 12. The phrase "the impedance of the section closer to the high frequency power source 11 than the primary coil 12" refers to "the impedance from the high frequency power source 11 to the input terminals 12a and 12b of the primary coil 12. That is, the variable impedance circuit 17 changes the impedance from the high frequency power source 11 to the input terminals 12a and 12b of the primary coil 12.

Impedance measuring equipment 25 is connected to an output line of the high frequency power source 11. A controller 24 is connected to the impedance measuring equipment 25. The impedance measuring equipment 25 functions as a resonant frequency detection section for detecting the resonant frequency of the resonant system 20, and also as a matching state detection section.

The non-contact power transmission apparatus 10 may be applied to a system that utilizes inductive charging to charge a secondary battery mounted on a vehicle. The secondary resonance coil 14, the secondary coil 15, the capacitor 19, and the load 16 are mounted on the vehicle. In the first embodiment, the load 16 serves as the secondary battery. The high frequency power source 11, the primary coil 12, the capacitor 18, the primary resonance coil 13, the variable impedance circuit 17, the impedance measuring equipment 25, and the controller 24 are mounted on a charger that charges the secondary battery without contact. The charger is provided at a ground facility, which is a charging station in the first embodiment.

In the first embodiment, the controller 24 forms a frequency matching section. The variable impedance circuit 17 and the controller 24 form an impedance matching section.

Operation of the non-contact power transmission apparatus 10 will now be described.

In a state where the vehicle is stopped at a predetermined position near an electric power supplying position (charger), electric power is supplied to the load 16.

The controller 24 outputs a drive signal to the variable capacitors 21, 22 to change the capacitance of the variable capacitors 21, 22 to an appropriate capacitance during electric power supply. As a result, the capacitance of the variable capacitors 21, 22 is changed to a value appropriate for the size of the load 16.

Then, the high frequency power source 11 outputs high frequency power to the primary coil 12 at the resonant frequency of the resonant system 20. When the primary coil 12 receives the electric power, a magnetic field is generated by electromagnetic induction. The magnetic field is intensified by magnetic field resonance of the primary resonance coil 13 and the secondary resonance coil 14. The secondary coil 15 extracts electric power from the magnetic field in the vicinity of the intensified secondary resonance coil 14 using electromagnetic induction. The extracted electric power is supplied to the load 16, that is, the secondary battery.

In this manner, the primary coil 12 receives electric power from the high frequency power source 11. The electric power from the primary coil 12 is supplied to the primary resonance coil 13 by electromagnetic induction. The secondary resonance coil 14 receives electric power from the primary resonance coil 13 by magnetic field resonance. The secondary coil 15 extracts electric power received by the secondary resonance coil 14 by electromagnetic induction. The electric power received by the secondary coil 15 is supplied to the load 16.

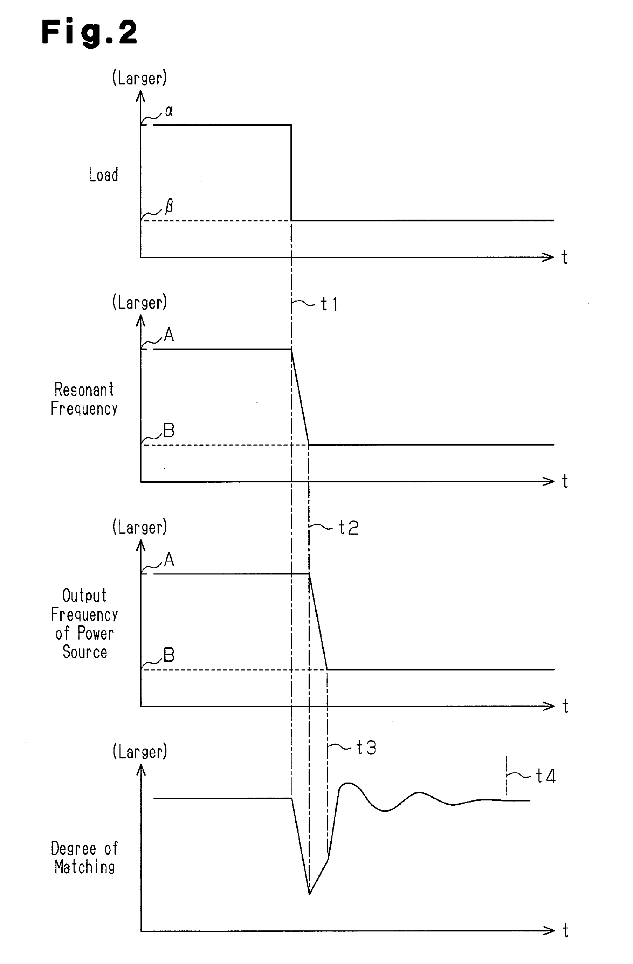

Assume that the value of the load 16 fluctuates from α to β at time t1 of Fig. 2. Then, the resonant frequency of the resonant system 20 is changed from A [Hz] to B [Hz] at time t2. In the first embodiment, α is greater than β (α > β), and A is greater than B (A > B).

The impedance measuring equipment 25 detects the resonant frequency of the resonant system 20, and sends the detected resonant frequency to the controller 24. That is, the controller 24 detects that the resonant frequency of the resonant system 20 has changed from A [Hz] to B [Hz].

The controller 24 then adjusts the output frequency of the high frequency power source 11 to match with the resonant frequency of the resonant system 20. That is, the output frequency of the high frequency power source 11 is changed from A [Hz] to B [Hz] at time t3.

Subsequently, the controller 24 performs impedance matching by adjusting the capacitor capacitance of the variable impedance circuit 17 during time t3 to t4 of Fig. 2. More specifically, the controller 24 performs impedance matching while checking the matching state by obtaining the detected value from the impedance measuring equipment 25. To perform impedance matching, the controller 24 adjusts the capacitor capacitance of the variable impedance circuit 17 such that the input impedance of the resonant system 20 at the resonant frequency of the resonant system 20 and the impedance of the section closer to the high frequency power source 11 than the primary coil 12 match with each other. The phrase "the input impedance of the resonant system 20" refers to "the impedance from the input terminals 12a and 12b of the primary coil 12 to the load 16". The phrase "the impedance of the section closer to the high frequency power source 11 than the primary coil 12" refers to "the impedance from the high frequency power source 11 to the input terminals 12a and 12b of the primary coil 12. That is, the controller 24 adjusts the capacitor capacitance of the variable impedance circuit 17 such that the impedance from the input terminals 12a and 12b of the primary coil 12 to the load 16 and the impedance from the high frequency power source 11 to the input terminals 12a and 12b of the primary coil 12 match with each other.

As a result, reflected power to the high frequency power source 11 is reduced. The electric power from the high frequency power source 11 is efficiently supplied to the load 16, that is, the secondary battery.

The relationship between the load fluctuation and the power transmission efficiency will now be described.

When the load 16 changes, the "matching state" is changed, and "the resonant frequency of the resonant system" is also changed.

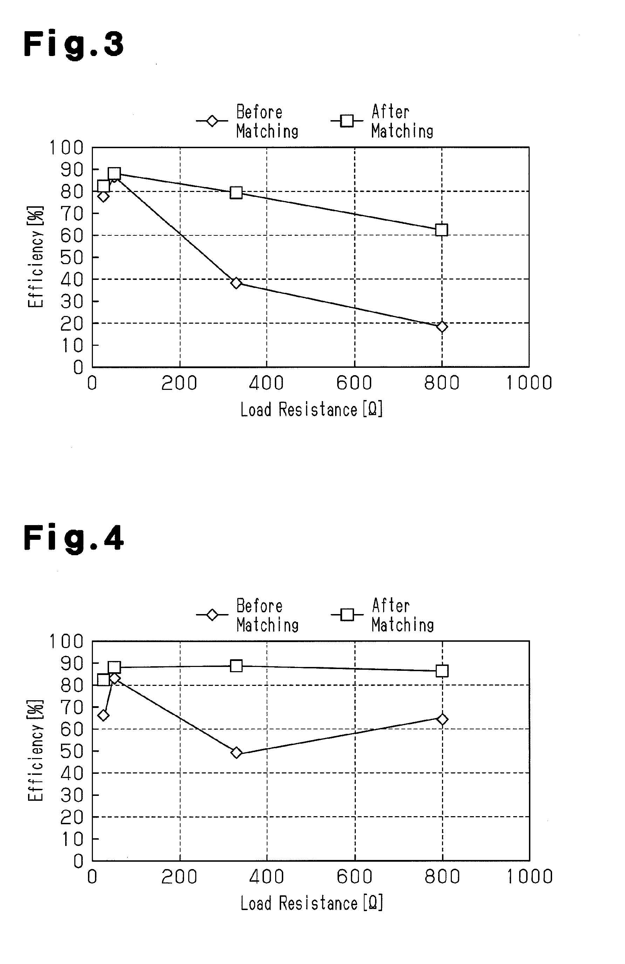

Therefore, as a comparative example, if impedance matching is performed with the output frequency of the high frequency power source fixed to an arbitrary frequency, the maximum efficiency of power transmission cannot be obtained as shown in Fig. 3. In Fig. 3, when the load resistance is, for example, 800 Ω, the power transmission efficiency is approximately 60%. Thus, maximum efficiency is not obtained.

In contrast, the first embodiment seeks the resonant frequency of the resonant system 20 at the time when the load 16 fluctuates. In the present embodiment, the output frequency of the high frequency power source is changed to match with the resonant frequency of the resonant system 20. Then, the impedance matching is achieved. As a result, when the load resistance is changed to about 330 Ω or 800 Ω, the power transmission efficiency is kept at almost 90% as shown in Fig. 4.

When the graph of Fig. 3 showing the efficiency before impedance matching is achieved is compared with the graph of Fig. 4 showing the efficiency before impedance matching is achieved, the power transmission efficiency is better in the graph of Fig. 4 than that in the graph of Fig. 3 since the output frequency of the high frequency power source is changed in the case of Fig. 4. In the first embodiment, since impedance matching is further performed after changing the output frequency of the high frequency power source, the power transmission efficiency is further increased.

The first embodiment has the following advantages.
(1) When the load 16 fluctuates, the controller 24 matches the resonant frequency of the resonant system 20 and the output frequency of the high frequency power source 11 with each other. In the state where the resonant frequency of the resonant system 20 and the output frequency of the high frequency power source 11 are matched with each other, the controller 24 and the variable impedance circuit 17 perform impedance matching such that the input impedance of the resonant system 20 at the resonant frequency and the impedance at the section closer to the high frequency power source 11 than the primary coil 12 are matched with each other. Thus, in the first embodiment, electric power is transmitted at the maximum efficiency regardless of the load fluctuation.
(2) The frequency matching section, which is the controller 24 in the first embodiment, matches the output frequency of the high frequency power source 11 with the resonant frequency of the resonant system 20.
(3) The impedance measuring equipment 25 detects the fluctuation of the load 16.

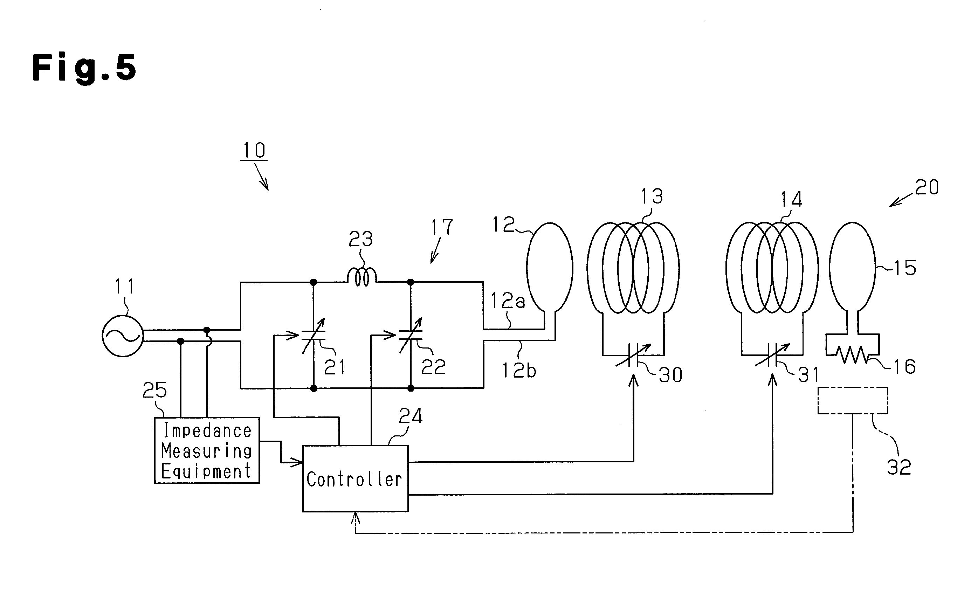

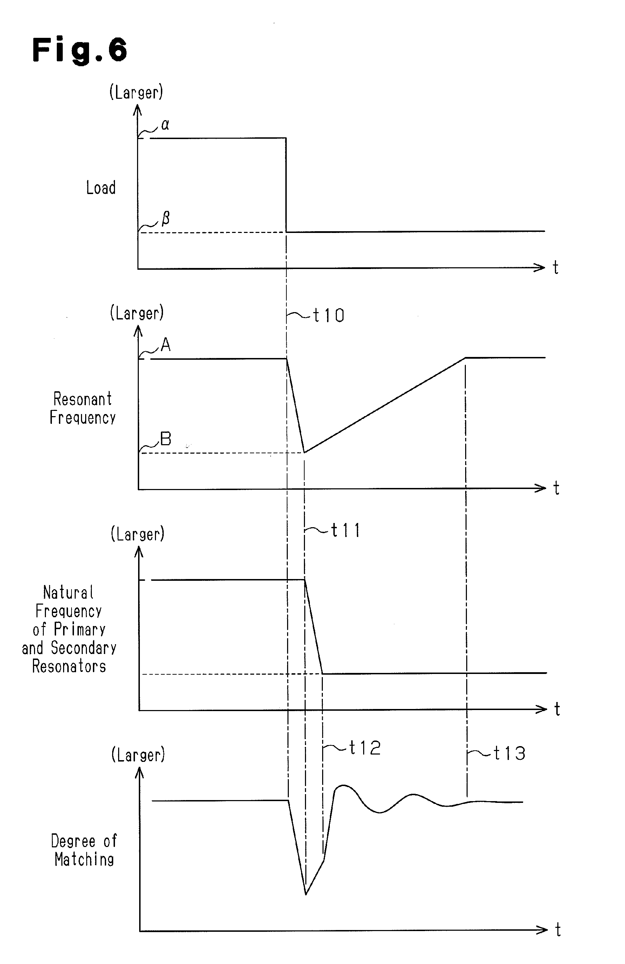

Figs. 5 and 6 show a second embodiment of the present disclosure. The differences from the first embodiment will mainly be discussed below.

As shown in Fig. 5, a variable capacitor 30 is connected in parallel to the primary resonance coil 13. A variable capacitor 31 is connected in parallel to the secondary resonance coil 14. The controller 24 is formed to be able to adjust the capacitance of the variable capacitor 30 and the capacitance of the variable capacitor 31. In the second embodiment, the controller 24 and the variable capacitors 30, 31 form the frequency matching section.

Suppose that the value of the load 16 fluctuated from α to β, at time t10 shown in Fig. 6. As a result, the resonant frequency of the resonant system 20 changes from A [Hz] to B [Hz] at time t11 of Fig. 6.

The impedance measuring equipment 25 detects the resonant frequency of the resonant system 20, and sends the detected resonant frequency to the controller 24. That is, the controller 24 detects that the resonant frequency of the resonant system 20 has changed from A [Hz] to B [Hz].

During time t11 to t12 shown in Fig. 6, the controller 24 adjusts the capacitance of the variable capacitors 30, 31 to match with the output frequency of the high frequency power source 11. In this manner, the controller 24 of the second embodiment adjusts the resonant frequency of the resonant system 20. That is, the controller 24 adjusts the natural frequency of the primary resonator and the natural frequency of the secondary resonator to adjust the resonant frequency of the resonant system 20. The primary resonator includes the primary coil 12 and the primary resonance coil 13, and the secondary resonator includes the secondary resonance coil 14 and the secondary coil 15.

The controller 24 performs impedance matching by adjusting the capacitor capacitance of the variable impedance circuit 17 during time t12 to t13 shown in Fig. 6. More specifically, while checking the matching state by obtaining the detected value from the impedance measuring equipment 25, the controller 24 performs impedance matching. To perform impedance matching, the controller 24 adjusts the capacitor capacitance of the variable impedance circuit 17 such that the input impedance of the resonant system 20 at resonant frequency and the impedance of the section closer to the high frequency power source 11 than the primary coil 12 are matched with each other.

As a result, reflected power to the high frequency power source 11 is reduced. The electric power from the high frequency power source 11 is efficiently supplied to the load 16, that is, the secondary battery.

The second embodiment has the following advantage.
(4) The controller 24 and the variable capacitors 30, 31 can match the resonant frequency of the resonant system 20 with the output frequency of the high frequency power source 11.

The present invention is not limited to the illustrated embodiments, but may be modified as follows.

In the first embodiment, the impedance measuring equipment 25 provided in the primary section detects the fluctuation of the load 16, and provides feedback to the controller 24. Instead, a load fluctuation detection section 26 (shown by the broken line in Fig. 1) may be provided in the secondary section. For example, by obtaining the state of charge (SOC) of the load 16, which is the secondary battery in the first embodiment, the load fluctuation detection section 26 monitors the state of charge of the secondary battery, and thus detects the fluctuation of the load 16.

Similarly, in the second embodiment also, a load fluctuation detection section 32 (shown by the broken line in Fig. 5) may be provided in the secondary section. The load fluctuation detection section 32 monitors the state of charge of the load by, for example, obtaining the SOC of the load, and thus detects the load fluctuation. That is, in the second embodiment also, the impedance measuring equipment 25 provided in the primary section does not necessarily detect the fluctuation of the load 16 and provide feedback to the controller 24.

In the first and second embodiments, the impedance measuring equipment 25 provided in the primary section functions as the resonant frequency detection section for detecting the resonant frequency of the resonant system 20, and also functions as the matching state detection section. Instead, the resonant frequency detection section and the matching state detection section of the resonant system 20 may be configured by separate devices. For example, the resonant frequency detection section of the resonant system 20 may be configured by impedance measuring equipment. The matching state detection section may be configured by voltage standing wave ratio (VSWR) measuring equipment.

The variable impedance circuit 17 does not necessarily include two variable capacitors 21, 22 and a single inductor 23. For example, either one of the variable capacitors 21, 22 may be omitted. That is, the variable impedance circuit 17 may be configured by a single variable capacitor and a single inductor 23. Also, the variable impedance circuit 17 may be configured by a fixed capacitor and a variable inductor.

The outer shape of the primary coil 12, the primary resonance coil 13, the secondary resonance coil 14, and the secondary coil 15 is not limited to a circular shape. For example, the outer shape may be a polygonal shape such as a quadrangular shape, a hexagonal shape, and a triangular shape. Alternatively, the outer shape may be an elliptical shape.

The primary resonance coil 13 and the secondary resonance coil 14 are not limited to the shape in which an electric wire is wound into a cylindrical shape. For example, the electric wire may be wound into a plane.

In the first embodiment, instead of using the capacitance of the capacitors 18, 19, the parasitic capacitance of the primary resonance coil 13 and the secondary resonance coil 14 may be used. In the case where the parasitic capacitance is used, the resonant system 20 is configured by the primary coil 12, the primary resonance coil 13, the secondary resonance coil 14, the secondary coil 15, and the load 16.

In the first embodiment, if the natural frequency of the primary resonator is equal to the natural frequency of the secondary resonator, the winding diameter and the number of windings of the primary resonance coil and the secondary resonance coil do not need to be the same. Furthermore, the capacitors 18, 19 do not need to be identical to each other.

At least one of a rectifier, a matching circuit, and a DC/DC converter may be provided between the load 16 and the secondary coil 15. If any of the above is provided, the resonant system 20 includes the rectifier, the matching circuit, and the DC/DC converter.

A primary coil (12), a primary resonance coil (13), a secondary resonance coil (14), a secondary coil (15), and a load (16) form a resonant system (20). A frequency matching section (24; 24, 30, 31) is configured to match the resonant frequency of a resonant system (20) and the output frequency of a high frequency power source (11) with each other when the load (16) fluctuates. An impedance matching section (17, 24) is configured to match the impedance from input terminals (12a, 12b) of the primary coil (12) to the load (16) at the resonant frequency and the impedance from the high frequency power source (11) to the input terminals (12a, 12b) of the primary coil (12) with each other.

## Claims

1. A non-contact power transmission apparatus comprising:
a high frequency power source (11);
a primary coil (12) having input terminals (12a, 12b) for receiving electric power from the high frequency power source (11);
a primary resonance coil (13) for receiving electric power from the primary coil (12) by electromagnetic induction;
a secondary resonance coil (14) for receiving electric power from the primary resonance coil (13) by magnetic field resonance;
a secondary coil (15) for extracting electric power received by the secondary resonance coil (14) by electromagnetic induction; and
a load (16) to which the electric power received by the secondary coil (15) is supplied,
**characterized in that** the primary coil (12), the primary resonance coil (13), the secondary resonance coil (14), the secondary coil (15), and the load (16) form a resonant system (20),
the non-contact power transmission apparatus further comprising:
a frequency matching section (24; 24, 30, 31) formed to match the resonant frequency of the resonant system (20) and the output frequency of the high frequency power source (11) with each other when the load (16) fluctuates; and
an impedance matching section (17, 24) formed to match the impedance from the input terminals (12a, 12b) of the primary coil (12) to the load (16) at the resonant frequency and the impedance from the high frequency power source (11) to the input terminals (12a, 12b) of the primary coil (12) with each other in a state where the frequency matching section (24; 24, 30, 31) matches the resonant frequency of the resonant system (20) and the output frequency of the high frequency power source (11) with each other.

2. The non-contact power transmission apparatus according to claim 1, **characterized in that** the frequency matching section (24; 24, 30, 31) matches the output frequency of the high frequency power source (11) with the resonant frequency of the resonant system (20).

3. The non-contact power transmission apparatus according to claim 1, **characterized in that** the frequency matching section (24; 24, 30, 31) matches the resonant frequency of the resonant system (20) with the output frequency of the high frequency power source (11).

4. The non-contact power transmission apparatus according to any one of claims 1-3, **characterized by** further comprising an impedance measuring equipment (25) formed to detect fluctuation of the load (16).

5. A non-contact power transmission method in a resonant system (20), wherein the resonant system (20) includes: a primary coil (12) having input terminals (12a, 12b) for receiving electric power from a high frequency power source (11); a primary resonance coil (13) for receiving electric power from the primary coil (12) by electromagnetic induction; a secondary resonance coil (14) for receiving electric power from the primary resonance coil (13) by magnetic field resonance; a secondary coil (15) for extracting electric power received by the secondary resonance coil (14) by electromagnetic induction; and a load (16) to which the electric power received by the secondary coil (15) is supplied,
the non-contact power transmission method **characterized by** comprising:
matching the resonant frequency of the resonant system (20) and the output frequency of the high frequency power source (11) with each other when the load (16) fluctuates; and
matching the impedance from the input terminals (12a, 12b) of the primary coil (12) to the load (16) at the resonant frequency and the impedance from the high frequency power source (11) to the input terminals (12a, 12b) of the primary coil (12) with each other in a state where the resonant frequency of the resonant system (20) and the output frequency of the high frequency power source (11) are matched with each other.
